# EUROPEAN PATENT SPECIFICATION

(11) **EP 3 530 484 B1**
(45) Date of publication and mention of the grant of the patent: **02.12.2020**
(21) Application number: 17862500.0
(22) Date of filing: 29.09.2017
(51) Int. Cl.: B60C 5/01, B60C 9/22, B60C 5/00

(54) **TIRE**
REIFEN
PNEU

(30) Priority: 18.10.2016 JP 2016204378
(43) Date of publication of application: 28.08.2019
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2017/035627
(87) International publication number: WO 2018/074196

(56) References cited:
- JP-A- H0 478 603
- JP-A- 2011 042 235
- JP-A- 2014 210 487
- US-A1- 2016 068 022

## Description

### Technical Field

The present disclosure relates to a tire.

### Background Art

Japanese Patent Application Laid-Open (JP-A) No. 2014-210487 discloses a tire including a belt layer in which a resin-covered cord configured by a reinforcing cord covered by a covering resin is wound in a spiral pattern onto an outer periphery of a tire frame member configured employing a resin material, and is bonded to the tire frame member. Reference is also made to US 2016/068022.

### SUMMARY OF INVENTION

### Technical Problem

In the conventional example described above, when bonding the resin-covered cord to the outer periphery of the tire frame member, hot air is blown onto an affixing face side of the resin-covered cord and onto the outer periphery of the tire frame member, and portions onto which the hot air is blown are melted. When welding the resin-covered cord to the outer periphery of the tire frame member, the resin-covered cord is pressed against the outer periphery of the tire frame member by a press roller. When force of the press roller acts on the molten portion of the outer periphery of the tire frame member, the molten resin overspills at the sides of the resin-covered cord to form uplifted resin pileups.

When such resin pileups are formed, the next section of resin-covered cord to be welded on tends to tilt as a result of the resin pileups. There is accordingly concern that the degree of bonding between sections of resin-covered cord adjacent in a tire axial direction might be insufficient, and the degree of bonding between the outer periphery of the tire frame member and the resin-covered cord might be insufficient.

An object of the present disclosure is to improve the durability of a tire including a belt layer configured by winding a resin-covered cord in a spiral pattern.

### Solution to Problem

A tire according to the present disclosure includes a tire frame member formed in a ring shape, and a belt layer that is provided at an outer periphery of the tire frame member, and in which a resin-covered cord, which is configured by covering a reinforcing cord with a covering resin is wound onto the outer periphery of the tire frame member in a spiral pattern around a tire circumferential direction, and is bonded to the tire frame member. A chamfered portion is formed at a tire axial direction end portion of a tire radial direction inside face of the resin-covered cord.

### Advantageous Effects of Invention

The present disclosure enables the durability of a tire including a belt layer configured by winding a resin-covered cord in a spiral pattern to be improved.

### BRIEF DESCRIPTION OF DRAWINGS

Fig. 1 is a cross-section illustrating a tire according to an exemplary embodiment.
Fig. 2 is a perspective cross-section illustrating a process for winding a resin-covered cord onto a tire case using a press roller.
Fig. 3 is a side view illustrating a state in which a resin-covered cord has been pressed against an outer periphery of a tire case by a press roller.
Fig. 4(A) is a cross-section illustrating a section of a resin-covered cord with a substantially parallelogram shaped cross-section profile that has been pressed against an outer periphery of a tire case, and the next section of the resin-covered cord to be pressed against the outer periphery of the tire case. Fig. 4(B) is a cross-section illustrating a state following on from Fig. 4(A), in which the resin-covered cord has been pressed against the outer periphery of the tire case by a press-roller illustrated.
Fig. 5(A) is a cross-section illustrating a section of a resin-covered cord with a substantially rectangular cross-section profile that has been pressed against an outer periphery of a tire case, and the next section of resin-covered cord to be pressed against the outer periphery of the tire case. Fig. 5(B) is a cross-section illustrating a state following on from Fig. 5(A), in which the resin-covered cord has been pressed against the outer periphery of the tire case by a press-roller illustrated.
Fig. 6 is a cross-section illustrating an example in which a resin sheet is provided between a tire case made of rubber and a resin-covered cord.

### DESCRIPTION OF EMBODIMENTS

Explanation follows regarding an exemplary embodiment of the present invention, with reference to the drawings. In the drawings, a tire circumferential direction is indicated by an arrow S, a tire axial direction (which may also be understood as a tire width direction) is indicated by an arrow W, and a tire radial direction is indicated by an arrow R. The tire axial direction refers to a direction parallel to the axis of rotation of the tire.

In the following explanation, the sides further from a tire equatorial plane CL along the tire axial direction are referred to as the "tire axial direction outsides" and the side closer toward the tire equatorial plane CL along the tire axial direction is referred to as the "tire axial direction inside". Moreover, the side further from a tire axis in the tire radial direction is referred to as the "tire radial direction outside", and the side closer to the tire axis in the tire radial direction is referred to as the "tire radial direction inside".

The methods for measuring the dimensions of the respective sections are the methods set out in the 2016 Year Book issued by the Japan Automobile Tire Manufacturers Association (JATMA). In cases in which TRA standards or ETRTO standards apply in the place of use or place of manufacture, these standards are followed.

### Tire

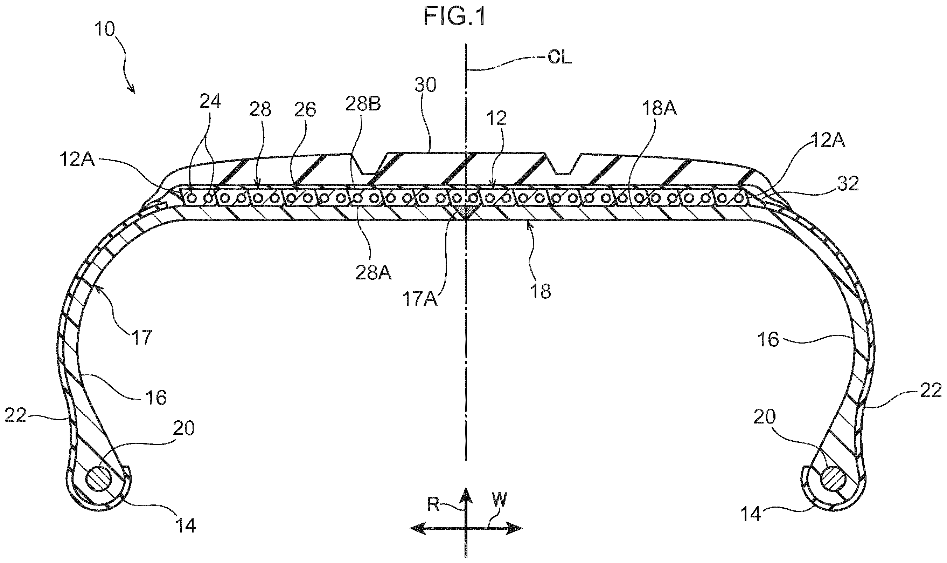

As illustrated in Fig. 1, tire 10 according to the present exemplary embodiment includes a tire case 17 serving as an example of a ring shaped tire frame member, and a belt layer 12.

The tire case 17 is for example configured employing a resin material, and is formed in a circular ring shape around the tire circumferential direction. The tire case 17 is configured including a pair of bead portions 14 disposed spaced apart from each other in the tire axial direction, a pair of side portions 16 extending from the pair of bead portions 14 toward the tire radial direction outside, and a crown portion 18 coupling together the pair of side portions 16. The bead portions 14 are locations that contact a rim (not illustrated in the drawings), and a covering layer 22, described later, is provided on the surface of each of the bead portions 14. The side portions 16 are formed at side portions of the tire 10, and curve gently so as to protrude toward the tire axial direction outsides on progression toward from the bead portions 14 toward the crown portion 18.

The crown portion 18 is a location that couples a tire radial direction outer end of one of the side portions 16 and a tire radial direction outer end of the other of the side portions 16 together, and supports a tread 30 laid at the tire radial direction outside of the crown portion 18.

In the present exemplary embodiment, the crown portion 18 has a substantially uniform thickness. An outer peripheral face 18A may be formed with a flat profile in cross-section taken along the tire axial direction, or may have a curving profile bulging toward the tire radial direction outside. Note that the outer peripheral face 18A of the crown portion 18 of the present exemplary embodiment configures an outer periphery of the tire case 17 to which the belt layer 12 is provided.

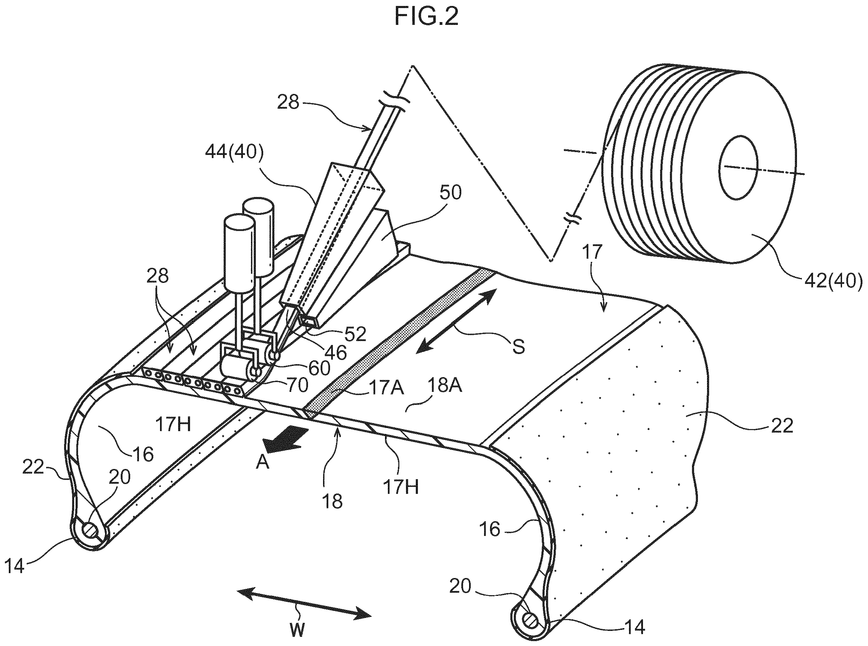

As illustrated in Fig. 2, the tire case 17 is formed by forming a pair of annular tire halves 17H, each including a single bead portion 14, a single side portion 16, and a half-width crown portion 18. The tire halves 17H are made to face each other and end portions of the half-width crown portions 18 are bonded together at the tire equatorial plane CL. The end portions are bonded together using, for example, a resin welding material 17A.

An annular bead core 20 extending around the tire circumferential direction is embedded in each of the bead portions 14. The bead core 20 is configured from a bead cord (not illustrated in the drawings). The bead cord is, for example configured by a metal cord such as a steel cord, an organic fiber cord, a resin-covered organic fiber cord, or a hard resin. Note that the bead core 20 itself may be omitted as long as sufficient rigidity of the bead portion 14 can be secured.

Of the surface of each of the bead portions 14, at least a portion that contacts the rim (not illustrated in the drawings) is formed with the covering layer 22 in order to increase the airtightness against the rim. The covering layer 22 is configured from a material such as a rubber material that is softer and more weather-resistant than the tire case 17.

In the present exemplary embodiment, the covering layer 22 is folded back from an inner face at the tire axial direction inside of each of the bead portions 14 toward the tire axial direction outside, and extends across an outer face of the side portion 16 to the vicinity of a tire axial direction outside end portion 12A of the belt layer 12. An extension end portion of the covering layer 22 is covered by cushion rubber 32, described later, and the tread 30. Note that the covering layer 22 may be omitted if sealing properties (airtightness) between the bead portion 14 and the rim (not illustrated in the drawings) can be secured by the bead portion 14 of the tire case 17 alone.

Note that the tire case 17 may be configured by an integrally molded article, or the tire case 17 may be manufactured as three or more separate resin members which are then bonded together. For example, respective locations of the tire case 17 (for example the bead portions 14, the side portions 16, and the crown portion 18) may be manufactured separately and then bonded together. In such cases, the respective locations of the tire case 17 (for example the bead portions 14, the side portions 16, and the crown portion 18) may be formed using resin materials with different characteristics to each other.

Reinforcing material (polymer or metal fibers, cord, nonwoven fabric, woven fabric, or the like) may be embedded in the tire case 17.

The belt layer 12 is provided at the outer periphery of the tire case 17. In the present exemplary embodiment, the outer periphery of the tire case 17 corresponds to the outer peripheral face 18A of the crown portion 18. In the belt layer 12, a resin-covered cord 28 is wound onto the outer periphery of the tire case 17 in a spiral pattern around the tire circumferential direction, and is bonded to the tire case 17. Sections of the resin-covered cord 28 that are mutually adjacent in the tire axial direction are bonded to one another. A tire radial direction inside face 28A of the resin-covered cord 28 is bonded to the outer periphery of the tire case 17. A tire radial direction outside face 28B of the resin-covered cord 28 is bonded to the tread 30 through the cushion rubber 32. The tire radial direction inside face 28A and the outside face 28B are formed so as to be substantially parallel to each other.

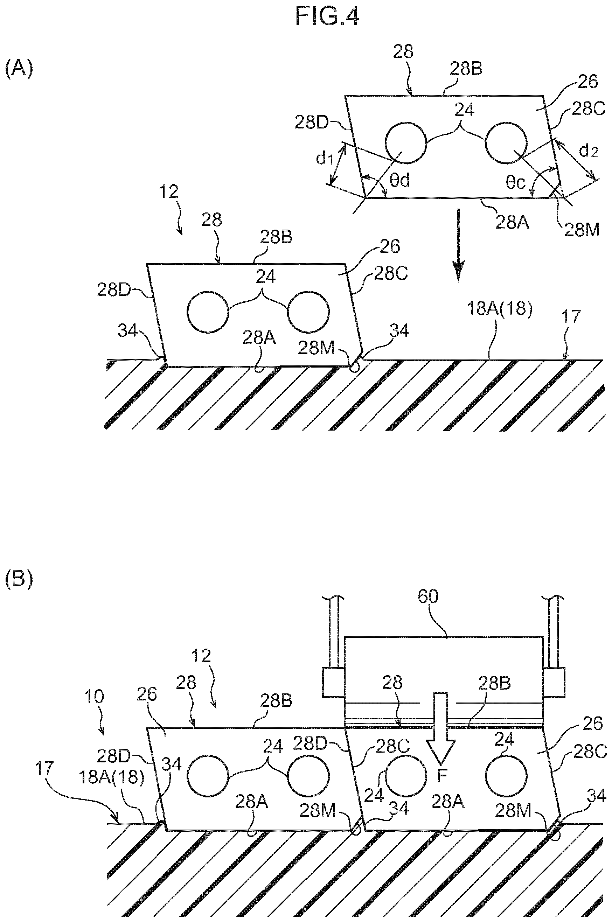

The resin-covered cord 28 is configured by covering a reinforcing cord 24 with a covering resin 26. As illustrated in Fig. 4, "sections of the resin-covered cord 28 that are mutually adjacent in the tire axial direction" refers to a side face 28C of one section of the resin-covered cord 28 and a side face 28D of another section of the resin-covered cord 28 that are adjacent to each other in the tire axial direction. The side faces 28C, 28D are made to oppose each other when winding the resin-covered cord 28 in a spiral pattern.

The side face 28C of the resin-covered cord 28 is inclined with respect to the tire radial direction so as to face the tire radial direction outside. The side face 28D is inclined with respect to the tire radial direction so as to face the tire radial direction inside. The side faces 28C, 28D are disposed so as to be substantially parallel to each other. Namely, in the example illustrated in Fig. 4, the resin-covered cord 28 has a substantially parallelogram shaped cross-section profile taken along the tire axial direction.

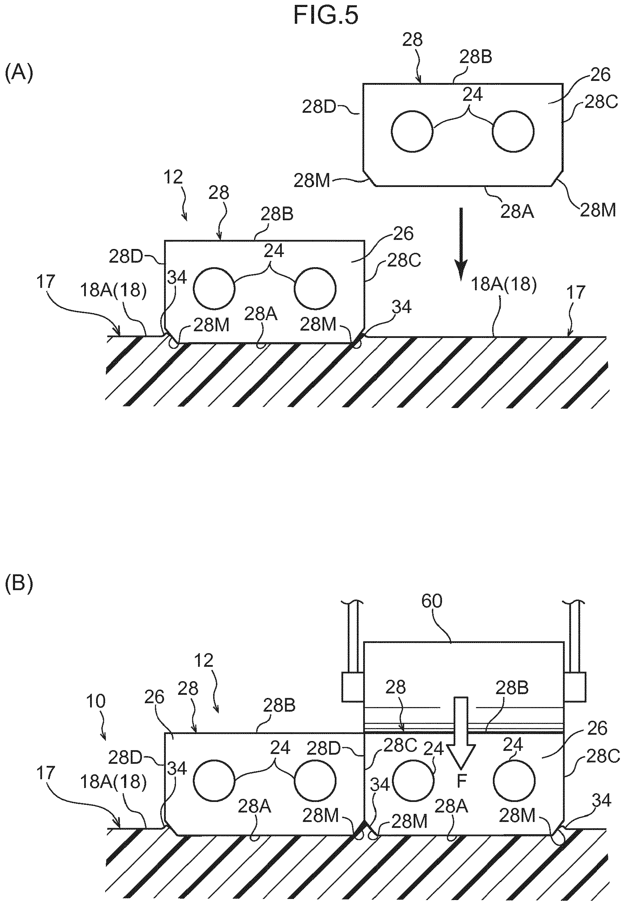

In the example illustrated in Fig. 5, the resin-covered cord 28 is formed with a substantially rectangular cross-section profile, and the side faces 28C, 28D are formed so as to be substantially parallel to the tire radial direction. In this manner, the side faces 28C, 28D may either be inclined, or not inclined, with respect to the tire radial direction.

As illustrated in Fig. 4, a chamfered portion 28M is formed at a tire axial direction end portion of the tire radial direction inside face 28A of the resin-covered cord 28. In a cross-section taken along the tire axial direction, the chamfered portion 28M is formed at a location where an angle of intersection between the tire radial direction inside face 28A and the side faces 28C, 28D at tire axial direction end portions of the resin-covered cord 28 is an acute angle. Specifically, an intersection angle θc between the tire radial direction inside face 28A and the side face 28C is an acute angle, and an intersection angle θd between the tire radial direction inside face 28A and the side face 28D is an obtuse angle (Fig. 4(A)). Thus, the chamfered portion 28M is formed at a corner where the tire radial direction inside face 28A and the side face 28C intersect.

The placement of the chamfered portion 28M is not limited to that illustrated in Fig. 4. As illustrated in Fig. 5, for example, chamfered portions 28M may be formed at two tire axial direction end portions of the tire radial direction inside face 28A of the resin-covered cord 28. The shapes and sizes of the chamfered portions 28M at the two end portions illustrated in Fig. 5 may be the same as each other, or may be different from each other.

When the resin-covered cord 28 is wound onto the outer periphery of the tire case 17 in a spiral pattern and bonded thereto, resin pileups 34 are formed uplifted at the sides of the resin-covered cord 28. Forming the chamfered portions 28M at the two end portions (Fig. 5) of the tire radial direction inside face 28A enables the chamfered portions 28M to be made smaller than when the chamfered portion 28M is only formed at one end portion (Fig. 4) of the tire radial direction inside face 28A while still achieving a given volume of resin pileups 34. This is because, in the example illustrated in Fig. 5, the capacity to accommodate the resin pileups 34 can be doubled by combining two chamfered portions 28M between two sections of the resin-covered cord 28 adjacent in the tire axial direction. The chamfered portion 28M is a location that becomes portion accommodating overspill resin.

The chamfered portion 28M is a portion where a corner of the covering resin 26 has a diagonally cutaway profile. The chamfered portion 28M may be formed with a linear profile in a cross-section taken along the tire axial direction (Fig. 4 and Fig. 5), or may be formed with a curving profile in a cross-section taken along the tire axial direction (not illustrated in the drawings). The chamfered portion 28M may also be formed by a combination of straight and curved lines.

The reinforcing cord 24 is, for example, configured from a metal fiber or an organic fiber monofilament (solid wire), or from a multifilament (twisted wires) configured by twisting together such fibers. The covering resin 26 is, for example, configured by a thermoplastic elastomer. In Fig. 4, the resin-covered cord 28 includes one or plural pieces of the reinforcing cord 24 within the covering resin 26, with two pieces of the reinforcing cord 24 being covered by the covering resin 26 as an example.

Resin materials employed for the tire case 17 and the covering resin 26 in the present exemplary embodiment are not limited to thermoplastic elastomers. For example, thermoplastic resins, thermosetting resins, and other general purpose resins, as well as engineering plastics (including super engineering plastics) may be employed as the resin materials. Note that the resin materials referred to herein do not include vulcanized rubber.

Thermoplastic resins (including thermoplastic elastomers) are polymer compounds of materials that soften and flow with increased temperature, and that adopt a relatively hard and strong state when cooled. In the present specification, out of these, distinction is made between polymer compounds of materials that soften and flow with increasing temperature, that adopt a relatively hard and strong state on cooling, and that have a rubber-like elasticity, considered to be thermoplastic elastomers, and polymer compounds of materials that soften and flow with increasing temperature, that adopt a relatively hard and strong state on cooling, and do not have a rubber-like elasticity, considered to be non-elastomer thermoplastic resins.

Examples of thermoplastic resins (including thermoplastic elastomers) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

Such thermoplastic materials have, for example, a deflection temperature under load (at 0.45 MPa during loading), as defined by ISO 75-2 or ASTM D648, of 78°C or greater, a tensile yield strength, as defined by JIS K7113, of 10 MPa or greater, and a tensile elongation at break, also as defined by JIS K7113, of 50% or greater. Materials with a Vicat softening temperature, as defined by JIS K7206 (method A), of 130°C may be employed.

Thermosetting resins are curable polymer compounds that form a 3 dimensional mesh structure with increasing temperature. Examples of thermosetting resins include phenolic resins, epoxy resins, melamine resins, and urea resins.

As resin materials, in addition to the above thermoplastic resins (including thermoplastic elastomers) and thermosetting resins, general purpose resins may also be employed, such as meth(acrylic)-based resins, EVA resins, vinyl chloride resins, fluororesins, and silicone-based resins.

### Advantageous Effects

As described later when describing a tire manufacturing method, when bonding the resin-covered cord 28 to the outer periphery of the tire case 17 (the outer peripheral face 18A of the crown portion 18), hot air is blown onto the tire radial direction inside face 28A, this being an affixing face side of the resin-covered cord 28, and onto the outer periphery of the tire case 17, and the portions onto which the blown hot air is blown are melted. As illustrated in Fig. 4(A) and Fig. 4(B), the resin-covered cord 28 is pressed against the outer periphery of the tire case 17 (the outer peripheral face 18A of the crown portion 18) under pressing force F of a press roller 60, described later.

When the force of the press roller 60 acts on a molten portion at the outer periphery of the tire case 17, the molten resin overspills at the sides of the resin-covered cord 28 to form the uplifted resin pileups 34.

In the present exemplary embodiment, the chamfered portion 28M is formed at a tire axial direction end portion of the tire radial direction inside face 28A of the resin-covered cord 28, thereby enabling interference between the resin pileups 34 and the resin-covered cord 28 to be suppressed. Specifically, as illustrated in Fig. 4(A), a resin pileup 34 is formed at a portion where the chamfered portion 28M of the resin-covered cord 28 has been pressed against the outer periphery of the tire case 17, making is less likely that a resin pileup 34 forms at a region of the outer periphery where the next section of the resin-covered cord 28 is to be pressed against. Thus, interference between the resin pileup 34 and the section of the resin-covered cord 28 to be pressed next is suppressed. Tilting of the resin-covered cord 28 is thereby suppressed, such that the degree of bonding between sections of the resin-covered cord 28 adjacent in the tire axial direction, and the degree of bonding between the outer periphery of the tire case 17 and the resin-covered cord 28, is increased.

As illustrated in Fig. 4(A), a distance between a corner before being subjected to chamfering and the reinforcing cord 24 tends to be closer and the thickness of the covering resin 26 tends to be thinner at a location at the obtuse angle of the intersection angle θd between the tire radial direction inside face 28A and a side face of a tire axial direction end portion of the resin-covered cord 28 than at a location at the acute angle of the intersection angle θc. The thickness referred to here corresponds to a minimum distance from the surface of the reinforcing cord 24 to the corner of the covering resin 26 when without any chamfered portion 28M formed thereto. Namely, assuming the pieces of the reinforcing cord 24 are disposed inside the covering resin 26 at the same position in the tire radial direction and evenly in the tire axial direction, then there is a tendency for d1 < d2, wherein d1 is the minimum distance at the obtuse angled corner with the intersection angle θd, and d2 is the minimum distance at the acute angled corner with the intersection angle θc.

In the tire 10, the chamfered portion 28M is formed at the acute angled location with the intersection angle θc, namely, at the location where the thickness of the covering resin 26 is relatively thick. This enables interference between the resin pileups 34 and the resin-covered cord 28 to be suppressed, while securing the thickness (d1) of the covering resin 26 at a location where the resin thickness is relatively thin (at the obtuse angled corner with the intersection angle θd).

As illustrated in Fig. 4(B), when the resin-covered cord 28 is formed in a substantially parallelogram shape, the side face 28D of the adjacent section of the resin-covered cord 28 is pressed against the side face 28C facing toward the tire radial direction outside. This creates a strong bond between sections of covering resin 26 that are adjacent in the tire axial direction.

As illustrated in Fig. 5(A), in cases in which the chamfered portions 28M are formed at the two tire axial direction end portions of the tire radial direction inside face 28A of the resin-covered cord 28, the resin pileups 34 are formed at portions where the two chamfered portions 28M oppose each other in the tire axial direction. This enables interference between the resin pileup 34 and the resin-covered cord 28 to be further suppressed. Even if resin pileups 34 are formed by overspill at the sides of the resin-covered cord 28, positioning the chamfered portions 28M at these portions suppresses interference between the resin pileups 34 and the resin-covered cord 28.

In the present exemplary embodiment, the durability of the tire 10 including the belt layer 12 configured by winding the resin-covered cord 28 in a spiral pattern can be improved.

Moreover, consolidating plural, for example two, pieces of the reinforcing cord 24 within the covering resin 26 enables the time taken to wind the resin-covered cord 28 during tire manufacture to be reduced.

When the covering resin 26 of the resin-covered cord 28 and the tire case 17 are each configured from a thermoplastic elastomer, the variety of means for bonding the resin-covered cord 28 to the tire case 17 is increased. This thereby enables the degrees of freedom when selecting the bonding means to be increased. Specific examples of bonding means include welding using vibration or heat, and adhesion using an adhesive.

### Tire Manufacturing Method

Explanation follows regarding a manufacturing method of the tire 10 of the present exemplary embodiment. First, a thermoplastic resin is injection molded to form a set of the tire halves 17H incorporating the bead cores 20. The covering layer 22 is formed at the outer faces of the tire halves 17H.

Next, the pair of tire halves 17H are made to face each other and end portions of the portions configuring the crown portion 18 are abutted against each other. The resin welding material 17A is applied to the abutting portions in a molten state, and the pair of tire halves 17H are bonded together. The circular ring shaped tire case 17 is formed in this manner.

Next, explanation follows regarding a process to wind the resin-covered cord 28 onto the outer periphery of the tire case 17. First, the tire case 17 is attached to a tire support device (not illustrated in the drawings) that rotatably supports the tire case 17, and as illustrated in Fig. 2, a cord feeder 40, a heater 50, the press roller 60 serving as a pressing device, and a cooling roller 70 serving as a cooling device are moved to the vicinity of the outer periphery of the tire case 17.

The cord feeder 40 is configured including a reel 42 onto which the resin-covered cord 28 is wound, and a guide member 44. The chamfered portion 28M (Fig. 4 and Fig. 5) is formed in advance to the resin-covered cord 28. The guide member 44 is a member used to guide the resin-covered cord 28 unwound from the reel 42 onto the outer periphery of the tire case 17 (the outer peripheral face 18A of the crown portion 18). The guide member 44 is tube shaped, and the resin-covered cord 28 passes through the interior of the guide member 44. The resin-covered cord 28 is fed out through an opening 46 of the guide member 44 toward the outer peripheral face 18A of the crown portion 18.

The heater 50 blows hot air onto the thermoplastic resin, thereby heating and melting portions onto which the hot air is blown. The locations onto which the hot air is blown correspond to the tire radial direction inside face 28A of the resin-covered cord 28 to be pressed against the outer peripheral face 18A of the crown portion 18, and a portion of the outer peripheral face 18A of the crown portion 18 where the resin-covered cord 28 is to be laid. Note that in cases in which the resin-covered cord 28 has already been wound once or more around the circumference of the outer peripheral face 18A of the crown portion 18 such that resin-covered cord 28 that has been pressed against the outer peripheral face 18A is present, the hot air is also blown onto the side face 28C thereof.

The heater 50 blows out air heated by an electrical heating coil (not illustrated in the drawings) through a blower outlet 52 in an airflow generated by a fan (not illustrated in the drawings). Note that the configuration of the heater 50 is not limited to that described above, and any configuration may be applied as long as the thermoplastic resin can be heated and melted. For example, a hot iron may be contacted against locations to be melted to heat and melt the contacted portions. Alternatively, locations to be melted may be heated and melted using radiant heat, or may be heated and melted by irradiation with infrared radiation.

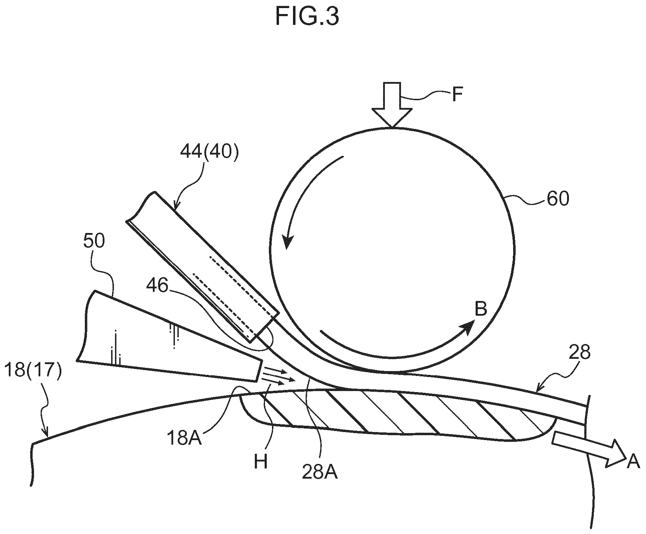

As illustrated in Fig. 3, the press roller 60 presses the resin-covered cord 28 against the outer periphery of the tire case 17 (the outer peripheral face 18A of the crown portion 18), and is capable of adjusting the pressing force F. A roller surface of the press roller 60 is treated so as to prevent molten resin material from adhering thereto. The press roller 60 is capable of rotating, and in a state in which the resin-covered cord 28 is being pressed against the outer periphery of the tire case 17, the press roller 60 performs following rotation (in the arrow B direction) with respect to the rotation direction of the tire case 17 (arrow A direction).

As illustrated in Fig. 2, the cooling roller 70 is disposed on the downstream side of the press roller 60 in the rotation direction (arrow A direction) of the tire case 17. The cooling roller 70 cools the resin-covered cord 28 and cools the crown portion 18 side through the resin-covered cord 28 while pressing the resin-covered cord 28 against the outer periphery of the tire case 17 (the outer peripheral face 18A of the crown portion 18). Similarly to the press roller 60, the pressing force of the cooling roller 70 can be adjusted, and the roller surface is treated so as to prevent molten resin material from adhering thereto. Moreover, the cooling roller 70 is capable of rotating similarly to the press roller 60, and in a state in which the resin-covered cord 28 is being pressed against the outer periphery of the tire case 17, the cooling roller 70 rotates following the rotation direction of the tire case 17 (arrow A direction). A liquid (for example water) flows through the interior of the cooling roller 70, and heat exchange with this liquid enables the resin-covered cord 28 contacted by the roller surface to be cooled. Note that the cooling roller 70 may be omitted in cases in which the molten resin material is cooled naturally.

As illustrated in Fig. 2 and Fig. 3, when winding the resin-covered cord 28 onto the outer periphery of the tire case 17, the tire case 17 that is attached to the tire support device (not illustrated in the drawings) is rotated in the arrow A direction, and the resin-covered cord 28 is fed out toward the outer peripheral face 18A of the crown portion 18 through the opening 46 of the cord feeder 40.

Hot air is blown through the blower outlet 52 of the heater 50, and the tire radial direction inside face 28A of the resin-covered cord 28 is adhered to a molten portion of the crown portion 18 as the tire radial direction inside face 28A of the resin-covered cord 28 and the portion of the crown portion 18 where the resin-covered cord 28 is to be laid are heated and melted. The resin-covered cord 28 is then pressed against the outer peripheral face 18A of the crown portion 18 by the press roller 60. When this is performed, the side faces 28C, 28D of sections of the resin-covered cord 28 that are adjacent in the tire axial direction are also bonded together (Fig. 4). The outside face 28B of the resin-covered cord 28 then contacts the cooling roller 70 such that the molten portion of the crown portion 18 and the molten portion of the resin-covered cord 28 are cooled and thereby solidified through the resin-covered cord 28. The resin-covered cord 28 and the crown portion 18 are welded together in this manner.

By winding the resin-covered cord 28 onto the outer peripheral face 18A of the crown portion 18 around the tire circumferential direction in a spiral pattern and pressing the resin-covered cord 28 against the outer peripheral face 18A in this manner, the belt layer 12 is formed at the outer periphery of the tire case 17, specifically, at the outer periphery of the crown portion 18. Note that in order to wind the resin-covered cord 28 in a spiral pattern, the position of the opening 46 of the cord feeder 40 may be moved in the tire axial direction as the tire case 17 rotates, or the tire case 17 may be moved in the tire axial direction.

Note that the tension of the resin-covered cord 28 may be adjusted by applying a brake to the reel 42 of the cord feeder 40, or by providing a roller or the like (not illustrated in the drawings) to adjust the tension partway along a path guiding the resin-covered cord 28. Adjusting the tension enables snaking in the placement of the resin-covered cord 28 to be suppressed.

Although not described in detail, the tire 10 is completed by providing the tread 30 at the tire radial direction outside of the tire case 17 and the belt layer 12 in a vulcanization process. The cushion rubber 32 may be disposed between the tread 30 and the tire case 17 and belt layer 12.

### Other Exemplary Embodiments

Although explanation has been given regarding an example of an exemplary embodiment of the present invention, exemplary embodiments of the present invention are not limited to the above, and obviously various modifications may be implemented within a range not departing from the scope of the present invention as defined by the appended claims.

In Fig. 4, the chamfered portion 28M is formed at a location where the angle of intersection between the tire radial direction inside face 28A and the side face of a tire axial direction end portion of the resin-covered cord 28 is an acute angle, specifically, to the corner where the tire radial direction inside face 28A and the side face 28C intersect. However, placement of the chamfered portion 28M is not limited thereto. As long as the thickness of the covering resin 26 is secured, the chamfered portion 28M may also be formed at a location where the intersection angle is an obtuse angle, specifically, to the location where the tire radial direction inside face 28A and the side face 28D intersect.

Moreover, although the chamfered portions 28M are formed at the two tire axial direction end portions of the tire radial direction inside face 28A in Fig. 5, a configuration may be applied in which a chamfered portion 28M is only formed at one tire axial direction end portion.

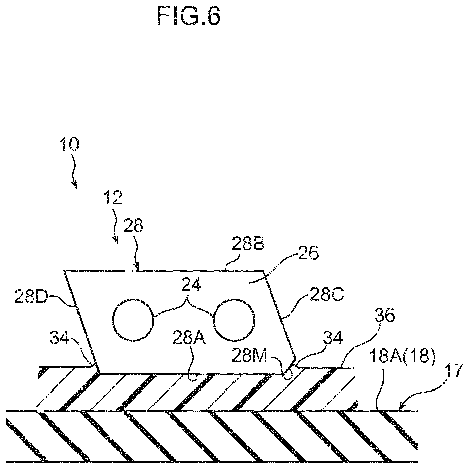

As illustrated in Fig. 6, the tire case 17 may be configured employing rubber. In such cases, for example, a resin sheet 36 may be provided to the tire case 17 between the outer peripheral face 18A of the crown portion 18 and the resin-covered cord 28, and the resin-covered cord 28 bonded to the outer peripheral face 18A through the resin sheet 36. The resin-covered cord 28 illustrated in Fig. 6 is not limited to having a substantially parallelogram shaped cross-section profile, and may have a substantially rectangular cross-section profile such as that illustrated in Fig. 5.

## Claims

1. A tire (10) comprising:
a tire frame member formed in a ring shape; and
a belt layer (12) that is provided at an outer periphery of the tire frame member, and in which a resin-covered cord (28), which is configured by covering a reinforcing cord (24) with a covering resin (26), is wound onto the outer periphery of the tire frame member in a spiral pattern around a tire circumferential direction, and is bonded to the tire frame member, **characterized in that**,
a chamfered portion (28M) being formed at a tire axial direction end portion of a tire radial direction inside face (28A) of the resin-covered cord (28).

2. The tire (10) of claim 1, wherein, in a cross-section taken along the tire axial direction, the chamfered portion (28M) is formed at a location of the resin-covered cord (28) where an angle of intersection between the tire radial direction inside face (28A) and a side face of the tire axial direction end portion is an acute angle.

3. The tire (10) of claim 1, wherein the chamfered portion (28M) is formed at two tire axial direction end portions of the tire radial direction inside face (28A).

## Patentansprüche

1. Reifen (10), der Folgendes umfasst:
ein Reifenrahmenelement, das in einer Ringgestalt geformt ist, und
eine Gürtellage (12), die an einem Außenumfang des Reifenrahmenelements bereitgestellt wird und in der ein harzüberzogener Kord (28), der durch Überziehen eines Verstärkungskords (24) mit einem Überzugsharz (26) gebildet ist, in einem spiraligen Muster um eine Reifenumfangsrichtung auf den Außenumfang des Reifenrahmenelements gewickelt ist und an das Reifenrahmenelement gebunden ist, **dadurch gekennzeichnet, dass**
ein abgeschrägter Abschnitt (28M) an einem Reifenaxialrichtungsendabschnitt einer in Reifenradialrichtung inneren Fläche (28A) des harzüberzogenen Kords (28) geformt ist.

2. Reifen (10) nach Anspruch 1, wobei, in einem Querschnitt, vorgenommen entlang der Reifenaxialrichtung, der abgeschrägte Abschnitt (28M) an einer Position des harzüberzogenen Kords (28) geformt ist, wo ein Schnittwinkel zwischen der in Reifenradialrichtung inneren Fläche (28A) und einer Seitenfläche des Reifenaxialrichtungsendabschnitts ein spitzer Winkel ist.

3. Reifen (10) nach Anspruch 1, wobei der abgeschrägte Abschnitt (28M) an zwei Reifenaxialrichtungsendabschnitten der in Reifenradialrichtung inneren Fläche (28A) geformt ist.

## Revendications

1. Bandage pneumatique (10), comprenant :
un élément de cadre du bandage pneumatique formé en une forme annulaire ; et
un couche de ceinture (12) agencée au niveau d'une périphérie externe de l'élément de cadre du bandage pneumatique, et dans lequel un câblé revêtu de résine (28), configuré en revêtant un câblé de renforcement (24) d'une résine de revêtement (26), est enroulé sur la périphérie externe de l'élément de cadre du bandage pneumatique en un motif en spirale autour d'une direction circonférentielle du bandage pneumatique, , et est relié à l'élément de cadre du bandage pneumatique, **caractérisé en ce que** :
une partie chanfreinée (28M) est formée au niveau d'une partie d'extrémité, dans une direction axiale du bandage pneumatique, d'une face interne (28A), dans une direction radiale du bandage pneumatique, du câblé revêtu de résine (28).

2. Bandage pneumatique (10) selon la revendication 1, dans lequel, dans une section transversale prise le long de la direction axiale du bandage pneumatique, la partie chanfreinée (28M) est formée au niveau d'un emplacement du câblé revêtu de résine (28) où un angle d'intersection entre la face interne (28A), dans la direction radiale du bandage pneumatique, et une face latérale de la partie d'extrémité dans la direction axiale du bandage pneumatique est un angle aigu.

3. Bandage pneumatique (10) selon la revendication 1, dans lequel la partie chanfreinée (28M) est formée au niveau de deux parties d'extrémité, dans la direction axiale du bandage pneumatique, de la face interne (28A) dans la direction radiale du bandage pneumatique.
